# EUROPEAN PATENT SPECIFICATION

(11) **EP 4 587 816 B1**
(45) Date of publication and mention of the grant of the patent: **26.08.2026**
(21) Application number: 23786312.1
(22) Date of filing: 08.09.2023
(51) Int. Cl.: G01N 23/223, G09B 23/28, G09B 23/30

(54) **POLYCONDENSATE FOR THE CREATION OF A MODEL FOR THE SIMULATION OF SOFT TISSUE WITH FLUORESCENCE, MIXTURE INCLUDING THIS POLYCONDENSATE, MODEL AND USE**
POLYKONDENSAT ZUR ERZEUGUNG EINES MODELLS ZUR SIMULATION VON WEICHGEWEBE MIT FLUORESZENZ, MISCHUNG MIT DIESEM POLYKONDENSAT, MODELL UND VERWENDUNG
POLYCONDENSAT POUR CRÉATION DE MODÈLES DE SIMULATION DE TISSUS MOUS AVEC FLUORESCENCE, MÉLANGE LE COMPRENANT, MODÈLE ET UTILISATION

(30) Priority: 13.09.2022 IT 202200018702
(43) Date of publication of application: 23.07.2025
(73) Proprietor: UpSurgeOn S.r.l., 20057 Assago (MI) (IT)
(72) Inventor: NICOLOSI, Federico, 20057 Assago, Milano (IT)
(74) Representative: De Lorenzo, Danilo
(86) International application number: PCT/IB2023/058908
(87) International publication number: WO 2024/057157

(56) References cited:
- EP-A1- 2 775 289
- CA-A1- 3 019 286
- US-A1- 2006 056 580
- US-A1- 2007 148 633
- US-A1- 2016 155 364
- US-A1- 2016 370 285
- US-A1- 2019 057 623
- US-A1- 2022 082 500

## Description

### Field of application

The present invention applies to the field of devices that may be used in surgical training procedures. More specifically, this disclosure relates to a polycondensate, a mixture, and a model having fluorescent properties for training in the identification of fluorescence in the context of the interaction of pathological tissues and/or the simulation of medical procedures for diagnostic or therapeutic purposes, including surgical procedures.

### Prior art

The training of qualified surgeons is a relevant issue to which significant resources are devoted each year within hospitals, research centers, and universities around the world, both in terms of time, cost and human resources.

Technological advances accompanying surgical practice have further highlighted the need for physicians to have constant access to models, platforms, and devices for practice and continuing education.

The ability to practice on models that are as faithful as possible to healthy and pathological human tissue, both for surgical planning and preoperative practice, is essential for acquiring the psychomotor skills necessary to operate with greater precision and accuracy, aspects that result in increased patient safety and reduced morbidity and mortality, as well as reducing the costs related thereto.

Although surgical training on animal models or cadaver preparations has traditionally been considered the "gold standard," it is apparent that it is no longer sustainable to rely on these models alone, due to the high costs related thereto, which are a known limitation to continuous use.

The issue is particularly relevant in branches of surgery with particularly slow learning curves and with significant implications on the quality of care of patients affected with conditions at high risk of peri-operative morbidity and mortality, such as neurosurgery, otolaryngology, spinal surgery, maxillofacial surgery, general surgery, cardiac surgery, thoracic surgery, gynecology, and others.

Image-based guidance is increasingly important in surgery, comprising both radiological images used intraoperatively and visual aid technologies designed to facilitate the intraoperative identification of pathological lesions and their extension to surrounding healthy structures.

An example of image-guided surgery includes imaging by fluorescence, wherein fluorescent agents are used to mark tumorous tissues and consequently their margins and any post-resection intracavitary remnants. An example of this technique is discosed in US2022082500A1.

Fluorescence imaging may reveal tumors, or tumorous remnants, even of small size, that may be easily missed during surgery due to size, color, or lack of other elements useful for the identification thereof (visual or tactile).

An example of fluorescence techniques in the neurosurgical field concerns the use of 5-aminolevulinic acid (5-ALA), as an agent for marking tumorous tissue of glial origin (grade III and grade IV glioma according to the WHO classification), and potentially other tumorous pathologies.

In many cases, recognition of the interface between healthy and pathological tissue is not easy, especially under white light and without specific aids. 5-ALA is used clinically for tumor detection (fluorescence imaging) and treatment (tumor resection), due to the fact that 5-ALA is selectively absorbed by glioma, metabolized into a protoporphyrin, which, when exposed to light in the ultraviolet-visible spectral region, emits fluorescent light, thus promoting the recognition of pathological tissue as opposed to the healthy tissue.

In a tumorous cell, there is a greater accumulation of metabolic intermediates of 5-ALA, which results in markedly greater visible fluorescence than in the healthy tissue.

The optimal fluorescence range of 5-ALA, observed at 620-710 nm (therefore within the orange-red field), may be obtained when exposed to visible light with UV in the range of 375-440 nm.

A further example of fluorescence techniques in the neurosurgical field concerns the use of fluorescein as an agent for marking tumorous tissue. For example, in high-grade gliomas, the high density of tumorous cells breaks the blood-brain barrier, thereby leading, following the administration of fluorescein, to a real-time enhancement of the tumorous tissue.

Compared to 5-ALA, fluorescein emits intense fluorescence within the 520-530 nm range, therefore of a yellow-green color, when excited by ultraviolet rays at 254 nm and within the blue range (465-490 nm).

Because a fluorescence-guided resection is a complex procedure, and because the risk of partial resections or tumorous remnants in this type of pathology turns out to be the main parameter in determining OS (overall survival) and PFS (progression free survival), it is clear how adequate training on performing fluorescence-based resections is necessary. Consequently, it is essential for surgical personnel to be adequately trained to perform these procedures, for example by simulating the entire procedure as closely as possible to the operative reality and as differentiated as possible, depending on the different types of fluorescence to be used.

Unfortunately, the tools and models that are currently available for such simulations and training typically fail to provide a sufficiently faithful, repeatable, and differentiable simulation of both the fluorescence and the healthy or pathological anatomical portion of interest.

Furthermore, those instruments and models that are currently available do not provide the possibility of trying different types of fluorescence on the same model.

Thus, there is a strong need to provide adequate means for surgical simulation even of surgeries using fluorescence as an imaging technique. In particular, a need is felt to provide compositions, mixtures, and simulation models that overcome the drawbacks mentioned with reference to the known art.

### Solution of the invention

The object of the present invention is to provide a mixture and a physical model for simulating a soft tissue, preferably a soft brain tissue, that succeeds at least partially in solving the above-mentioned issues. In particular, the object of the present invention is to provide a model having a rendering from the visual point of view of the fluorescence as close as possible to the rendering of a tumorous tissue within the surrounding healthy tissue during a surgical procedure.

Additionally, the object of the present invention is to provide a model that not only has rendering from a visual point of view, but also from a tactile point of view that is as close as possible to the rendering of soft brain tissue.

In a first subject matter, the present invention describes a polycondensate for making a mixture for simulating a soft brain tissue equipped with fluorescence.

In a second subject matter, the present invention describes a method for producing a mixture that may be used to make a model for simulating a soft tissue brain equipped with fluorescence.

In a third subject matter, the present invention describes a model for simulating a soft tissue, preferably a soft brain tissue, using simulated fluorescein-type fluorescence.

In a fourth subject matter, the present invention describes a model for simulating a soft tissue, preferably a soft brain tissue, with the simultaneous presence of simulated 5-ALA-type fluorescence and fluorescein.

### Description of the drawings

The features and the advantages of the invention according to the invention shall be made readily apparent from the following description of preferred example embodiments thereof, provided purely by way of a non-limiting example, with reference to the accompanying figures, wherein:
- Fig. 1 shows a model for simulating a soft brain tissue according to an embodiment of the invention;
- Fig. 1a shows an image of a model for the simulation of a soft brain tissue according to one embodiment of the invention wherein there is the simultaneous presence of a portion that simulates a fluorescence of the type 5-ALA and of the fluorescein-type, and possibly also of the ICG type.
- Fig. 1b shows the image of Fig. 1a in grayscale, i.e. an image of a model for the simulation of a soft brain tissue according to one embodiment of the invention wherein there is the simultaneous presence of a portion that simulates a fluorescence of the type 5-ALA and of the fluorescein-type, and possibly also of the ICG type.
- Fig. 2 shows in a histogram a result of a questionnaire on the invention regarding the job positions of the subjects interviewed;
- Fig. 3 shows in a pie chart another result of the questionnaire, regarding the years of experience of the subjects interviewed;
- Fig. 4 shows in a pie chart another result of the questionnaire, regarding the number of tumor resections completed as the first operator by the subjects interviewed;
- Fig. 5 shows in a pie chart another result of the questionnaire, regarding the number of tumor resections completed as first operator and as second operator by the subjects interviewed;
- Fig. 6 shows in a pie chart another result of the questionnaire, regarding the evaluation of surface anatomical accuracy of models for simulating a soft brain tissue according to embodiments of the invention;
- Fig. 7 shows in a pie chart another result of the questionnaire, regarding the evaluation of the tactile sensation in manipulating models for simulating a soft brain tissue according to embodiments of the invention;
- Fig. 8 shows in a pie chart another result of the questionnaire, regarding the evaluation of the visual appearance of the coloring of models for simulating a soft brain tissue according to embodiments of the invention;
- Fig. 9 shows in a pie chart another result of the questionnaire, regarding the evaluation of the identification of a simulation portion of a neoplastic tissue in models for simulating a soft brain tissue according to embodiments of the invention;
- Fig. 10 shows in a pie chart another result of the questionnaire, regarding the evaluation of the tactile sensation in manipulating models for simulating a soft brain tissue according to embodiments of the invention;
- Fig. 11 shows in a pie chart another result of the questionnaire, regarding the evaluation of the visual appearance of the coloring of models for simulating a soft brain tissue according to embodiments of the invention;
- Fig. 12 shows in a pie chart another result of the questionnaire, regarding the evaluation of the realism of the procedure of resection of a simulation portion of a neoplastic tissue in a model for simulating a soft brain tissue according to embodiments of the invention.

### Detailed description

A polycondensate in particle form for making a model for simulating a soft tissue with fluorescein-type fluorescence and/or 5-ALA type fluorescence, comprising melamine resin, toluene sulfonamide and a synthetic dye, forms the subject matter of the present invention. According to the embodiment wherein the simulated fluorescence is of the 5-ALA type, the synthetic dye comprises a mixture of a fluorescent red synthetic dye and a fluorescent blue synthetic dye. Such a polycondensate is suitable for emitting a fluorescence observed in the field 620-710 nm, when exposed to visible light with UV in the range of 375-440 nm. Therefore, such a polycondensate is particularly suitable for simulating 5-ALA-type fluorescence in a real soft tissue for surgical procedures.

According to the embodiment wherein the simulated fluorescence is of the fluorescein-type, the synthetic dye comprises at least a green or yellow-green synthetic dye. Such a polycondensate is thus suitable for emitting a fluorescence peak that is observed within the field of 480-530 nm (preferably between 510nm and 530nm), therefore of a yellow-green color, when excited by ultraviolet rays at 254 nm and/or in the blue range (465-490 nm). Therefore, such a polycondensate is particularly suitable for simulating a fluorescein-type fluorescence in a real soft tissue for surgical procedures.

Also covered by the present invention is a mixture for making a model for simulating a soft brain tissue using 5-ALA fluorescence, comprising silicone and a polycondensate according to the embodiment described above with reference to 5-ALA.

Also covered by the present invention is a mixture for making a model for simulating a soft brain tissue using fluorescein-type fluorescence, comprising silicone and a polycondensate according to the embodiment described above with reference to fluorescein.

According to one embodiment, with reference to the fluorescein simulation, the mixture comprises between 0.01% and 1% (w/w) of said polycondensate, including endpoints, and for the remaining part a silicone or silicone-based substance.

According to a still further advantageous embodiment, with reference to the fluorescein simulation, the mixture comprises between 0.01% and 0.3% (w/w) of said polycondensate, including endpoints, and for the remaining part a silicone or silicone-based substance.

In particular, according to an exemplary embodiment for the simulation of fluorescein, the mixture comprises 16 grams of silicone, or a silicone-based material, and 0.05 grams of polycondensate.

According to one embodiment, with reference to the simulation of 5-ALA, the mixture comprises between 0.1% and 1% (w/w) of said polycondensate, including endpoints, and for the remaining part a silicone or silicone-based substance.

According to an exemplifying embodiment, the mixture comprises 16 grams of silicone or a silicone-based material and 0.04 grams of polycondensate.

According to a further aspect, a particularly suitable mixture for reproducing neoplastic soft brain tissue is also a subject matter of the present invention. In this variant, such a mixture for making a model for simulating a soft brain tissue with neoplasm comprises the aforesaid polycondensate in one of the variants for the simulation of the 5-ALA fluorescence or for the simulation of the fluorescein, gelatin and predominantly by weight a mixture of glycerin and sorbitol.

For the purposes of the present invention, it has been decided to indicate quantities by mass percentage, also known to the person skilled in the art as percentage amount by weight and indicated by the symbol % (w/w), which corresponds to the amount by weight expressed in grams of the component of interest present in 100 g of total mixture (total weight of the mixture).

According to an embodiment of the invention, the gelatin and glycerin are in a ratio between 1:10 to 1:30 including endpoints.

According to an embodiment, gelatin and sorbitol are in a ratio between 1:10 and 1:30 including endpoints.

According to an embodiment, gelatin is present in an amount at most equal to 10% (w/w), preferably at most 5% (w/w), even more preferably between 1% and 4% (w/w).

According to an embodiment, glycerin is present in an amount between 30% and 55% (w/w) including endpoints, preferably between 35% and 50% (w/w) including endpoints, even more preferably between 38% and 46% (w/w) including endpoints.

According to an embodiment, sorbitol is present in an amount between 30% and 55% (w/w) including endpoints, preferably between 35% and 50% (w/w) including endpoints, even more preferably between 38% and 46% (w/w) including endpoints.

Preferably, the gelatin is a 300 Bloom gelatin.

Bloom degree is a unit of measurement of the solidity of a gel. It is defined as the weight measured in grams required for a piston, normally 12.7 mm in diameter, to cause the gel surface to be lowered by 4 mm without breaking it. The gel, before being tested, must be prepared with a concentration of 6.67% and allowed to stand 17 hours at a temperature of 10°C. The test was originally developed by Oscar T. Bloom.

The mixture comprises, for the remaining percentage amount by weight, water and, optionally, one or more mixing additives.

"Mixing additives" refers to substances added to give the mixture certain qualities or to improve its features and final rendering.

According to an embodiment, said mixing additives are one or more of the components chosen from the group that comprises: a silicone oil, a pigmented component.

In one embodiment, silicone oil is present in an amount less than 1% (w/w).

Preferably, the pigmented component is chosen from the group that comprises: powdered Vicenza earth, white titanium powder, white liquid pigment for food use.

The present invention also pertains to a method for preparing a mixture for making a model for simulating a soft brain tissue according to any of the embodiments described above.

In particular, said method comprises the following steps:
a) mixing gelatin in water until the gelatin is completely dissolved;
b) heating the mixture of gelatin and water;
c) mixing glycerin with sorbitol;
d) heating the mixture of glycerin and sorbitol;
e) mixing the mixture of gelatin and water with the mixture of glycerin and sorbitol;
f) mixing the polycondensate.

According to an embodiment of the invention, during or at the end of step e), one or more mixing additives selected from the group comprising a silicon oil and a pigmented component are mixed into the solution.

According to an embodiment, the mixture of gelatin and water obtained at the end of step a) comprises gelatin in an amount between 10% and 30% (w/w) including endpoints, preferably between 15% and 25% (w/w) including endpoints, even more preferably about 20% (w/w) .

According to an embodiment, step a) is conducted at room temperature.

According to an embodiment, step a) is conducted for between 5 and 10 minutes including endpoints.

According to an embodiment, during step c) glycerin and sorbitol are mixed in equal parts.

According to an embodiment, the mixture during step b) is brought up to a temperature between 60°C and 80°C including endpoints, preferably between 68°C and 75°C including endpoints, even more preferably to about 70°C.

According to an embodiment, the mixture during step d) is brought up to a temperature between 60°C and 80°C including endpoints, preferably between 68°C and 75°C including endpoints, even more preferably to about 70°C.

According to an embodiment, steps a) and c) of the method are carried out simultaneously.

According to an embodiment, steps b) and d) of the method are carried out simultaneously.

According to an embodiment, the steps of the method are carried out in the order in which they have been described.

The present invention also pertains to a model 300 for simulating a soft brain tissue comprising a mixture according to any of the embodiments described above.

In one embodiment, said model is a simulation model of a shapeless, structurally and morphologically undefined biological tissue.

In one embodiment, said model is a simulation model of a structurally and morphologically defined anatomical portion, such as the brain, or a portion of the brain, or the encephalon, or a portion of the encephalon. This embodiment is preferably obtained with the silicone-containing mixture.

The term "soft tissue" means any organic human tissue, both healthy and pathological, which has a lower density than bone tissue. For the purpose of the present invention, as already specified, "soft tissue" will be considered to be the encephalon, a portion of the encephalon, or tissues constituting the encephalon.

As mentioned above, the subject matter of the present invention is also a model 300 for simulating a soft tissue, preferably a brain tissue, as specified above and which is also capable of simulating a portion of the soft tissue, preferably brain, affected by a disease, and in particular affected by neoplasm.

According one embodiment, a model 300 for the simulation of a soft brain tissue with fluorescence comprises a first mixture for simulating a soft brain tissue of the fluorescein-type, as described within the present discussion, and a second mixture for simulating a soft brain tissue using type 5-ALA fluorescence as described within the present discussion.

Preferably, the second mixture comprises silicone and a second polycondensate comprising melamine resin, toluene sulfonamide and a synthetic dye, said second polycondensate being suitable for emitting a fluorescence observed in the field of 620-710 nm, when exposed to UV visible light in the range of 375-440 nm. Alternatively, the second mixture is a mixture comprising glycerin and sorbitol as described in this discussion.

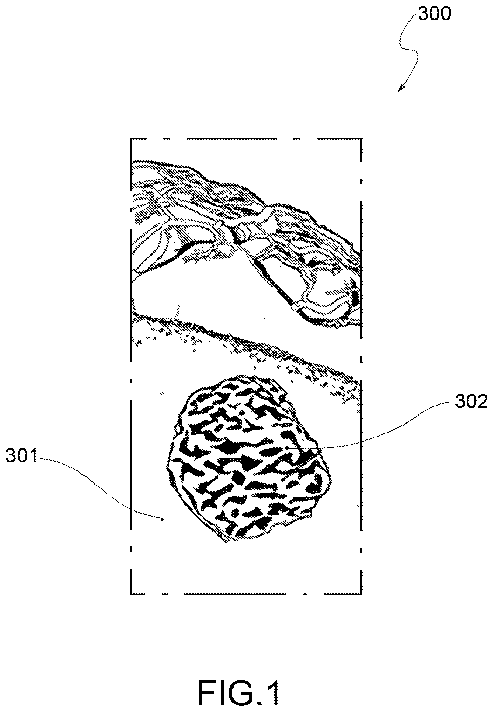

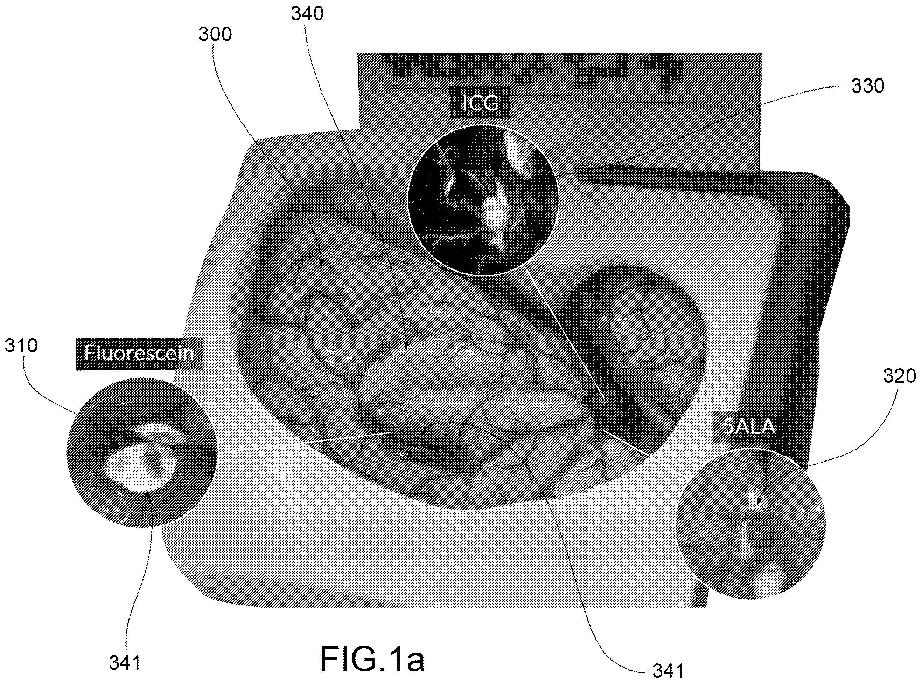

According to one embodiment, for example shown in figures 1a to 1b, the first mixture is comprised in a fluorescein portion 310 of the model 300 positioned at a distance from a 5-ALA portion 320 of the model 300 comprising the second mixture.

Advantageously, by virtue of the positioning of the fluorescein portion 310 at a distance from the 5-ALA portion, it is possible to limit, or even prevent, interference phenomena between the two types of fluorescence during the training of only one of the two.

Preferably a spacer made of silicone material is interposed between the fluorescein portion 310 and the 5-ALA portion 320.

According to one embodiment, the model comprises a portion made of silicone material 340, for example a portion that simulates the greater part of brain tissue, in which a pocket 341 is obtained, the fluorescein portion 310 being housed in said pocket.

In a further advantageous manner, the interposition of silicone material or the insertion into a pocket further enables the avoidance of fluorescent interference phenomena between the fluorescein portion and the 5-ALA portion, thereby ensuring the possibility of being able to use the same model simultaneously, both for the training of the 5-ALA fluorescence and of the fluorescein-type fluorescence.

According to one embodiment, the model 300, or for example the portion of silicone material 340, morphologically reproduces a portion of brain comprising a deep front seat, an insular surface and a Sylvian fissure. In this variant, the fluorescein portion 310 is positioned in the deep front seat and wherein the 5-ALA portion 320 is positioned in a valley of the Sylvian fissure.

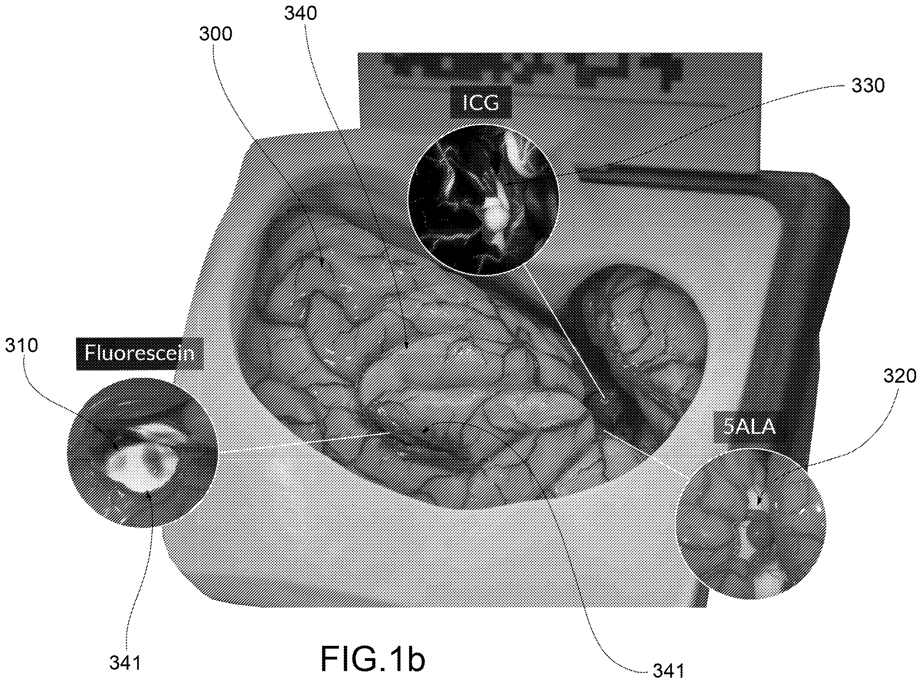

According to one embodiment, for example shown in figure 1, the model 300 comprises a first portion 301 for simulating healthy tissue and a second portion 302 for simulating neoplastic tissue.

According to an embodiment, said first portion and said second portion comprise a mixture according to any of the embodiments described above containing sorbitol and glycerin.

In other words, a model for simulating a soft brain tissue affected by neoplasm according to the present invention comprises a first portion 301 for simulating healthy tissue and a second portion 302 for simulating neoplastic tissue. Furthermore, the first portion 301 and the second portion 302 each comprise a mixture comprising water, gelatin, glycerin, and sorbitol, wherein the content by weight of glycerin and sorbitol is predominant with respect to the content by weight of gelatin.

Furthermore, the first portion 301 comprises a mixture in any of the previously described embodiments containing sorbitol, glycerin, and a polycondensate as described in the present discussion.

Preferably, the first portion 301 comprises a liquid dye and the second portion 302 comprises at least one powdered pigment.

According to an embodiment, the liquid dye in the first portion 301 is a liquid dye for food use and wherein the powdered pigment is a mineral pigment.

According to an embodiment, the liquid dye in the first portion is a mixture of at least two liquid dyes selected from the group comprising: a yellow dye for food use, a white dye for food use, a brown dye for food use, a black dye for food use, and a red dye for food use.

Preferably, the liquid dye in the first portion is a mixture consisting of at least 70% white dye.

According to an embodiment, the liquid dye in the first portion 301 is a mixture consisting of a yellow dye for food use, a white dye for food use, a brown dye for food use, a black dye for food use, and a red dye for food use. This allows for proper coloring similar to white matter brain tissue while ensuring ultrasound passage for imaging.

Preferably, each liquid dye for food use is composed of a number of ingredients, which will also be referred to below by reference to the European food additive coding (e.g., EXXX).

Preferably, the yellow liquid dye contains the dye: E102; white liquid dye contains the dye: E171; red liquid dye contains the dye: E129; brown liquid dye contains the mixture of dyes: E155, E153, E102, E133; black liquid dye contains the dye: E153.

Preferably, the yellow liquid dye is composed of glucose syrup, sugar, water, humectant: E422; dye: E102; modified starch, thickener: E406; acidity corrector: E330; preservative: E202.

Preferably, the white liquid dye is composed of dye: E171; humectant: E422; water.

Preferably, the red liquid dye is composed of glucose syrup, sugar, water, humectant: E422; dye: E129; modified starch, thickener: E406; acidity corrector: E330; preservative: E202.

Preferably, the brown liquid dye is composed of glucose syrup, sugar, water, humectant: E422; dyes: E155, E153, E102, E133; modified starch, thickener: E406; acidity corrector: E330; preservative: E202.

Preferably, the black liquid dye is composed of glucose syrup, sugar, water, humectant: E422; dye: E153; modified starch, thickener: E406; acidity corrector: E330; preservative: E202.

According to an embodiment, the powdered pigment of the second portion comprises one or more components selected from the group comprising: calcium carbonate (CaCO₃), hematite (Fe₂O₃), iron hydroxide (Fe(OH)₂), and calcium sulfate (CaSO₄).

According to an embodiment, the powdered pigment of the second portion consists of at least calcium carbonate (CaCO₃) and hematite (Fe₂O₃) and possibly also iron hydroxide (Fe(OH)₂) and calcium sulfate (CaSO₄). This allows adequate coloring of the second portion simulating the neoplasm and at the same time allows adequate echogenicity of the tissue for ultrasound detection.

Preferably, therefore, the first portion simulates the white matter of the brain and the second portion the neoplastic matter.

According to an embodiment, the percentage amount by weight of glycerin comprised in said first portion is different from the amount of glycerin comprised in said second portion.

According to an embodiment, the percentage amount by weight of sorbitol comprised in said first portion is different from the amount of sorbitol comprised in said second portion.

According to an embodiment, the ratio of sorbitol to glycerin in the first portion is different from the ratio of sorbitol to glycerin in the second portion.

According to an embodiment, the percentage amount by weight of glycerin comprised in said first portion is greater than the amount of glycerin comprised in said second portion.

According to an embodiment, the percentage amount by weight of sorbitol comprised in said first portion is greater than the amount of glycerin comprised in said second portion, at equal weight.

According to an embodiment, gelatin and glycerin are comprised in said first portion in a ratio between 1:20 and 1:30 including endpoints.

According to an embodiment, gelatin and sorbitol are comprised in said first portion in a ratio between 1:20 and 1:30 including endpoints.

The person skilled in the art will understand that, depending on the choice of ratios between the components, the above-described variants related to percentage amount by weight will be combinable in a coherent manner.

According to an embodiment, in said first portion gelatin is present in an amount between 1% and 3% (w/w) .

According to an embodiment, in said first portion glycerin is present in an amount between 43% and 46% (w/w) including endpoints.

According to an embodiment, in said first portion sorbitol is present in an amount between 43% and 46% (w/w) including endpoints.

According to an embodiment, gelatin and glycerin are comprised in said second portion in a ratio between 1:10 and 1:25 including endpoints.

According to an embodiment, gelatin and sorbitol are comprised in said second portion in a ratio between 1:10 and 1:25 including endpoints.

According to an embodiment, in said second portion gelatin is present in an amount between 1% and 4% (w/w) including endpoints.

According to an embodiment, in said second portion glycerin is present in an amount between 38% and 45% (w/w) including endpoints.

According to an embodiment, in said second portion sorbitol is present in an amount between 38% and 45% (w/w) including endpoints.

According to an embodiment, the pigmented components comprised in said first portion and second portion, respectively, are different.

Advantageously, in the event that the percentage amount by weight of gelatin, sorbitol, and glycerin comprised in said first portion were equal to the percentage amount by weight of gelatin, sorbitol, and glycerin comprised in said second portion, respectively, it would still be possible to distinguish and identify said first portion and said second portion by virtue of the different coloring given by the different pigmented component.

According to an embodiment, said second portion is entirely embedded in said first portion.

The term "embedded" means that the second portion is entirely surrounded by said first portion, so that the outer surface of the second portion is entirely in contact with the first portion.

According to an embodiment, the production method of the simulation model of the invention is comprised in the group that comprises: casting in molds.

The present invention also pertains to the use of the polycondensate according to any of the above-described embodiments for making a model of a soft tissue, preferably brain tissue, that is suitable for use in surgical training procedures.

The present invention also pertains to the use of a mixture described in any of the embodiments discussed in this document for making a model for simulating soft tissue, preferably brain tissue, affected by neoplasm and suitable for use in surgical training procedures.

The present invention also pertains to the use of the simulation model of a soft brain tissue according to any of the above-described embodiments in surgical training procedures.

Innovatively, the present invention provides a polycondensate, a mixture, a production method, and a model that may be used in place of the known art for surgical training procedures simulating fluorescein-type fluorescence.

According to a further innovative aspect, the present invention provides a polycondensate, a mixture, a production method, and a model that may be used in place of the known art for surgical training procedures simulating 5-ALA type fluorescence.

According to a still further innovative aspect, the present invention provides a polycondensate, a mixture, a production method, and a model that may be used in place of the known art for surgical training procedures for simultaneously simulating both a 5-ALA type fluorescence and a fluorescein-type fluorescence.

In particular, this makes it possible to simultaneously train the use of different types of fluorescence, in employing the same model, resulting in training efficiency and effectiveness.

Advantageously, it is possible to vary the ratios between the components in the intervals specified in the embodiments of the mixture to obtain a mixture with a different texture and different tactile and visual aspects for the operator, but still falling within the tactile and visual sensations as similar to reality as possible, while at the same time ensuring an adequate 5-ALA fluorescence response, even when used with standard microscope filters used in surgical practice.

Furthermore, the present invention makes it possible to vary the ratios of the amount of gelatin, glycerin, and sorbitol in the mixture and their percentage amounts by weight with respect to the total weight to reproduce the texture of the soft brain tissue.

In particular, it is possible to vary the related ratios between the amounts of gelatin, glycerin, and sorbitol in the mixture and their percentage amounts by weight with respect to the total weight to reproduce the texture and tactile and visual aspects of the white matter of the brain.

In particular, it is possible to vary the related ratios between the amounts of gelatin, glycerin, and sorbitol in the mixture and their percentage amounts by weight with respect to the total weight to reproduce the texture and tactile and visual aspects of a neoplastic brain tissue, as well as 5-ALA fluorescence.

In a particularly advantageous way, the components of the mixture according to the invention and the method for producing the same allow a mixture and a model that is stable over time to be obtained.

Advantageously, in the model produced by means of a mixture comprising silicone oil, the surface of the model is moist, creating a "greasy" and "oily" effect, so as to simulate the real surface appearance of the human brain.

It should be noted that such above-mentioned effect is limited to the outer surface of the model.

Advantageously, by adding a pigmented component to the mixture, it is possible to vary the visual appearance of the mixture so that it resembles the color of the real soft brain tissue.

Advantageously, it is possible to provide for a model that comprises portions of different coloring, for example a first white portion for simulating the white portion of the brain and a second portion of a different color for simulating neoplastic tissue.

Advantageously, the second portion for simulating a neoplastic tissue having a different color is easily identified and distinguishable from the first portion for simulating the white portion of the brain.

Innovatively, moreover, while providing adequate tactile and visual tissue adherence, the model according to the present invention enables the use of the usual ultrasonographic imaging equipment. In particular, in the model providing for the first portion (white matter) and the second portion (neoplasm), the use of different types of dye products surprisingly made it possible to correctly simulate the distinction between healthy tissue (first portion) and pathological tissue (second portion) on ultrasound. This allows the surgical operator not only to obtain an adequate tactile and visual response, but also a simulated response from the point of view of ultrasonographic imaging that is close to reality. In this way, the surgical operator, using a single model, is able to train in both the surgical act and ultrasonographic imaging, which is useful, for example, as a guide to resection and 5-ALA fluorescence imaging. Therefore, an optimal synergistic effect is obtained.

Advantageously, a user may practice the surgical technique on the model of the invention with the necessary surgical instruments, such as scalpels and ablation systems and aspirators.

It is clear that, to the embodiments of the present invention, a person skilled in the art, in order to meet specific needs, could make variations or substitutions of elements with functionally equivalent ones.

These variants are also contained within the scope of protection as defined by the following claims. Moreover, each variant described as belonging to a possible embodiment may be implemented independently of the other variants described.

### EXAMPLES and QUESTIONNAIRE

To prove the effectiveness of the present invention, a questionnaire was conducted on multiple models for simulating a soft brain tissue affected by neoplasm, made according to some variant embodiments of the present invention. The prepared models affected by neoplasm, hereinafter also simply referred to as test models, comprise a first simulation portion of healthy tissue and a second simulation portion of neoplastic tissue. Each test model covered by the questionnaire was made with a different mixture. In particular, the first simulation portion of healthy tissue and the second simulation portion of neoplastic tissue of each test model were made with different compositions. In particular, for the implementation of the first portion of the test models, a mixture was chosen comprising:
- gelatin in an amount between 1% and 3% (w/w), including endpoints;
- glycerin in an amount between 43% and 46% (w/w), including endpoints;
- sorbitol in an amount between 43% and 46% (w/w), including endpoints.
In particular, for the implementation of the second portion of the test models, a mixture was chosen comprising:
- gelatin in an amount between 1% and 4% (w/w) including endpoints;
- glycerin in an amount between 38% and 45% (w/w) including endpoints;
- sorbitol in an amount between 38% and 45% (w/w) including endpoints.

The resulting test models were tested by fifteen subjects. Each subject tested all of the multiple test models prepared for conducting the questionnaire.

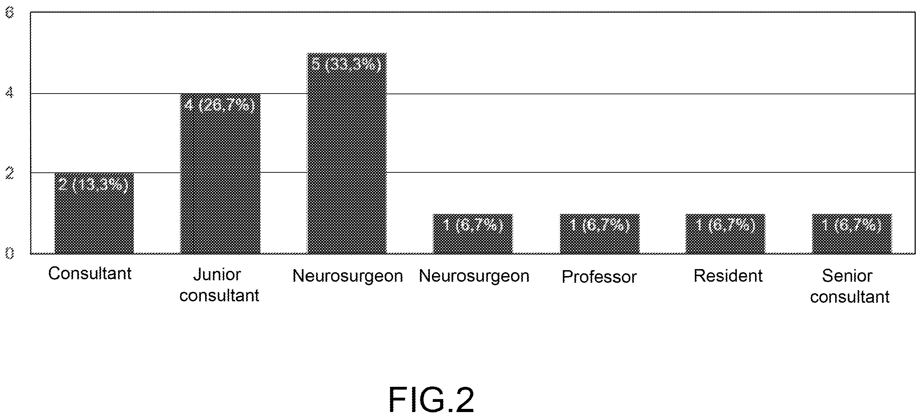

Fig. 2-5 schematically show information relating to the subjects interviewed.

Fig. 2 shows the job positions held by the subjects interviewed when they filled out the questionnaire.

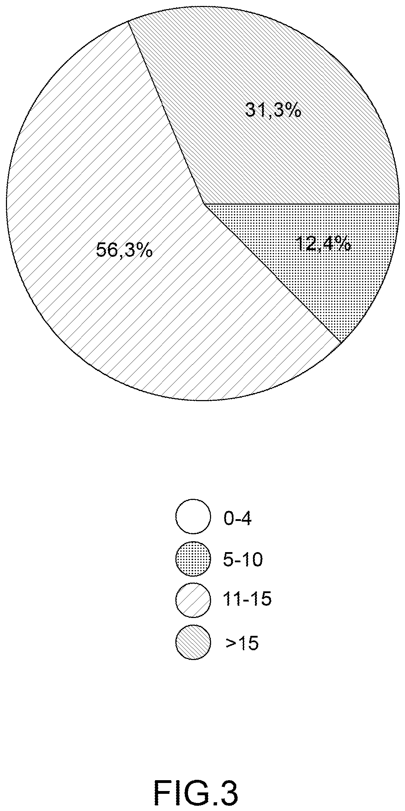

Fig. 3 shows in a pie chart the percentage of subjects interviewed having a number of years of experience in the indicated ranges.

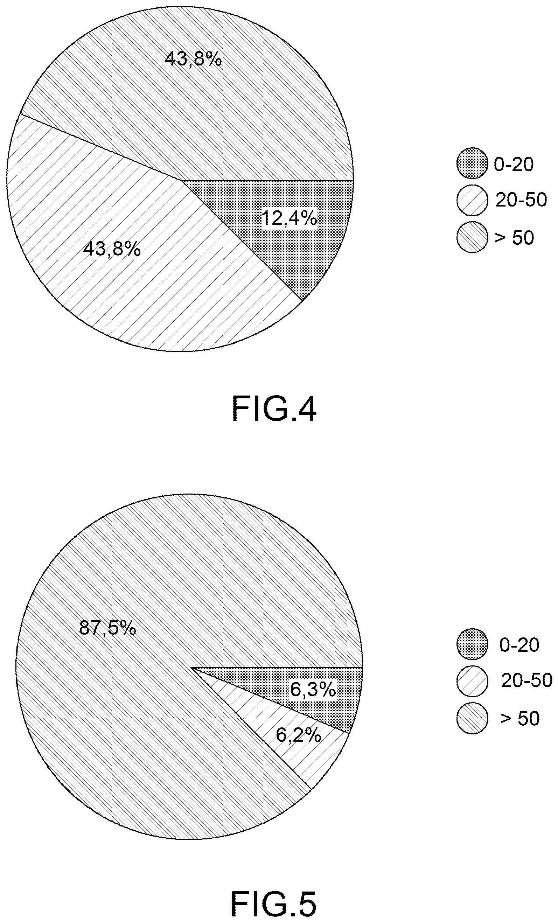

Fig. 4 shows the number of brain tumor resections (intrinsic tumors only) completed by the subjects interviewed, operating as the first operator in their professional careers.

Fig. 5 shows the number of brain tumor resections (intrinsic tumors only) completed by the subjects interviewed, operating as first and second operator in their professional careers.

As may be seen from the information shown in Fig. 2-5, the subjects interviewed have different degrees of experience, hold different job positions, and have completed different numbers of brain tumor resections. Therefore, the pool of subjects interviewed appears to be sufficiently heterogeneous.

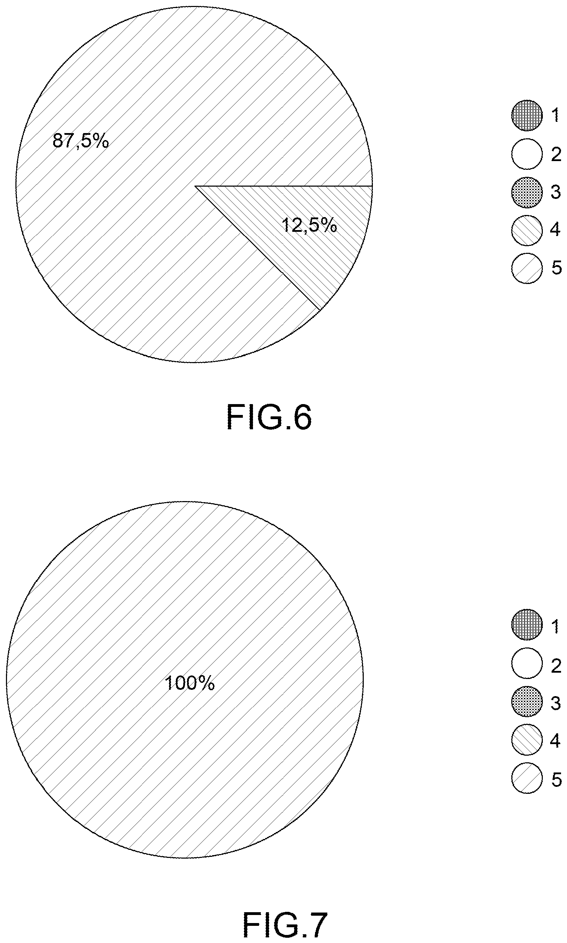

Fig. 6-12 show schematically the results to the questions asked during the test related to the prepared models. The answers to each question have been grouped into a single pie chart for greater immediacy and ease of analysis of the results.

In response to each question, each subject expressed his or her opinion with a graduated value from 1 to 5, wherein value 1 is "completely disagree," and value 5 is "completely agree."

Fig. 6-8 show in schematic form the results of the responses given by the subjects interviewed regarding the healthy tissue simulation portion of the test models.

The subjects were asked to evaluate the surface anatomical accuracy of the healthy tissue simulation portion of the test models when compared with that of the brain/cerebellum.

The pie chart in Fig. 6 shows the result of evaluating the surface anatomical accuracy of the test models. As may be seen, the anatomical models made for the test meet the requirements for surface anatomical accuracy.

The subjects were asked to evaluate whether the tactile sensation in manipulating the healthy tissue simulation portion of the test models was realistic.

The pie chart in Fig. 7 shows the result of the assessment of tactile sensation in manipulating the healthy tissue simulation portion of the test models. As may be seen, the tactile feel of the healthy tissue simulation portion of the test models appears realistic.

The subjects were asked to evaluate whether the visual appearance in the coloring of the healthy tissue simulation portion of the test models was realistic.

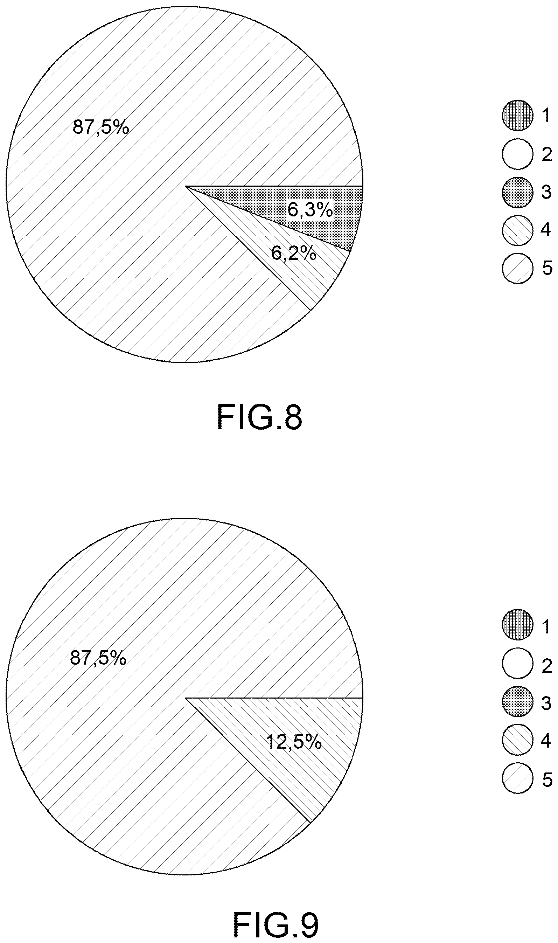

The pie chart in Fig. 8 shows the result of visual appearance evaluation in the coloring of the healthy tissue simulation portion of the test models. As is shown, the coloring of the healthy tissue simulation portion of the test models appears realistic.

Fig. 9-11 show in schematic form the results of the responses given by the subjects interviewed regarding the neoplastic tissue portion of the test models submitted to them.

The subjects were asked to evaluate the accuracy of identifying the portion of neoplastic tissue in test models.

The pie chart in Fig. 9 shows the result of evaluating the identification of the simulation portion of a neoplastic tissue in the test models. As may be seen, the simulation portion of neoplastic tissue was accurately identified.

The subjects were asked to evaluate whether the tactile sensation in manipulating the neoplastic tissue simulation portion of the test models was realistic.

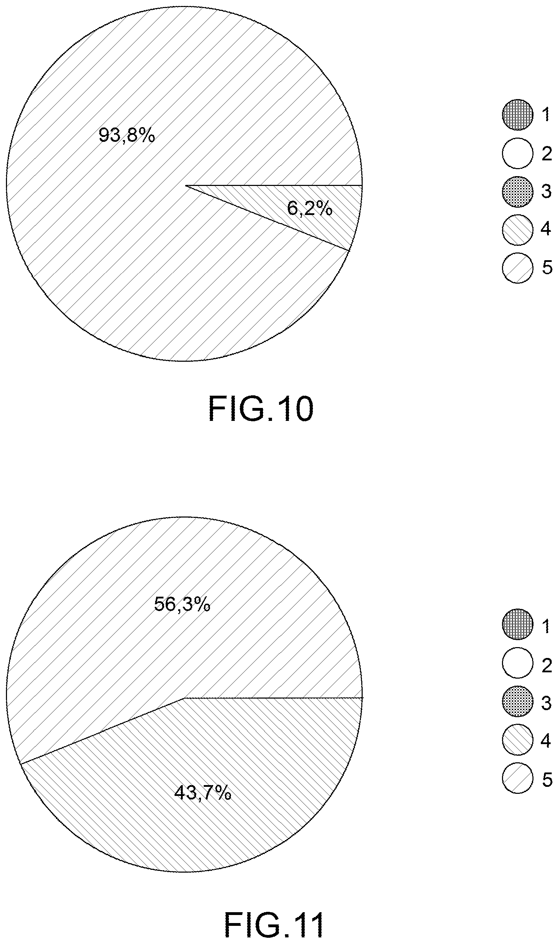

The pie chart in Fig. 10 shows the result of the assessment of tactile sensation in manipulating the simulation portion of a neoplastic tissue of the test models. As may be seen, the tactile sensation of the neoplastic tissue simulation portion of the test models appears realistic.

The subjects were asked to evaluate whether the visual appearance in the coloring of the neoplastic tissue simulation portion of the test models was realistic.

The pie chart in Fig. 11 shows the result of the visual appearance evaluation in the coloring of the simulation portion of a neoplastic tissue in the test models. As may be seen, the color of the neoplastic tissue simulation portion of the test models appears realistic.

The subjects were asked to evaluate whether the resection of the simulation portion of a neoplastic tissue from the simulation portion of healthy tissue in the test models was similar to actual experience.

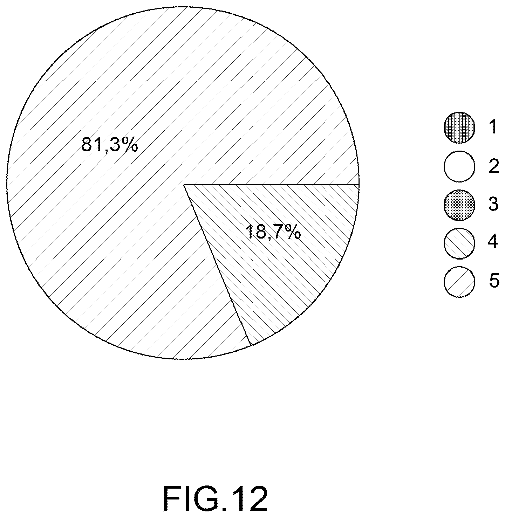

The pie chart in Fig. 12 shows the result of the evaluation of the realism of the resection procedure of the second simulation portion of a neoplastic tissue from the first simulation portion of healthy tissue of the test models. As may be seen, the resection of the simulation portion of neoplastic tissue appears realistic.

From the test conducted and the answers obtained to the questions of the questionnaire, it may be concluded that the objects of the present invention are fully achieved.

## Claims

1. A polycondensate in particle form for making a model for simulating a soft tissue using fluorescein-type fluorescence,
**characterized in that** said polycondensate comprises melamine resin, toluene sulfonamide and a synthetic dye, said polycondensate being suitable for emitting a fluorescence peak observed in the field of 480-530 nm, when excited by ultraviolet rays at 254 nm and/or in the blue range between 465 and 490 nm.

2. A mixture for making a model for simulating a soft brain tissue using fluorescein-type fluorescence, **characterized by** comprising silicone and a polycondensate according to claim 1.

3. Mixture according to claim 2, wherein the content of polycondensate is between 0.01% and 1% (w/w), including endpoints.

4. A mixture for making a model for simulating a soft brain tissue using fluorescein-type fluorescence, **characterized by** comprising a polycondensate according to claim 1, water, gelatin, glycerin and sorbitol, wherein the content by weight of glycerin and sorbitol is predominant with respect to the content by weight of gelatin.

5. Mixture according to claim 4, wherein:
- gelatin and glycerin are in a mutual ratio between 1:10 and 1:30, including endpoints;
- gelatin and sorbitol are in a mutual ratio between 1:10 and 1:30, including endpoints.

6. Mixture according to claim 4 or 5, wherein:
- gelatin is present in an amount at most equal to 10% (w/w), preferably at most equal to 5% (w/w), even more preferably between 1% and 4% (w/w);
- glycerin is present in an amount between 30% and 55% (w/w), including endpoints, preferably between 35% and 50% (w/w), including endpoints, even more preferably between 38% and 46% (w/w), including endpoints;
- sorbitol is present in an amount between 30% and 55% (w/w), including endpoints, preferably between 35% and 50% (w/w), including endpoints, even more preferably between 38% and 46% (w/w), including endpoints.

7. Mixture according to any one of claims 4 to 6, comprising silicone oil.

8. A model for simulating a soft brain tissue using fluorescein-type fluorescence, **characterized by** comprising a mixture according to any one of claims 2 to 7.

9. A model for simulating a soft brain tissue using fluorescein-type fluorescence **characterized by** comprising a first mixture according to any one of claims 2 to 7 and a second mixture for simulating a soft brain tissue using 5-ALA fluorescence, said second mixture comprising silicone and a second polycondensate comprising melamine resin, toluene sulfonamide and a synthetic dye, said second polycondensate being suitable for emitting a fluorescence observed in the field of 620-710 nm, when exposed to UV visible light in the range of 375-440 nm.

10. Model according to claim 9, wherein the first mixture is included in a fluorescein portion of the model positioned at a distance from a 5-ALA portion of the model comprising the second mixture.

11. Model according to claim 10, wherein a spacer made of silicone material is interposed between the fluorescein portion and the 5-ALA portion.

12. Model according to claim 10 or 11, comprising a portion made of silicone material, in which a pocket is obtained, the fluorescein portion being housed in said pocket.

13. Model according to claim 10 or 11 or 12, wherein said model morphologically reproduces a portion of brain comprising a deep front seat, an insular surface and a Sylvian fissure, and wherein the fluorescein portion is positioned in the deep front seat and wherein the 5-ALA portion is positioned in a valley of the Sylvian fissure.

14. Model according to claim 8 comprising:
- a first portion (301) for simulating a healthy tissue;
- a second portion (302) for simulating a neoplastic tissue,
wherein said second portion comprises a mixture according to any one of claims 3 to 7,
and wherein said first portion (301) comprises water, gelatin, glycerin and sorbitol, wherein the content by weight of glycerin and sorbitol is predominant with respect to the content by weight of gelatin.

15. Model according to claim 14, wherein the percentage amounts by weight of glycerin and sorbitol comprised in said first portion (301) are greater than the amounts of glycerin and sorbitol comprised in said second portion (302), respectively, and wherein
in said first portion:
- gelatin and glycerin are comprised in said first portion in a mutual ratio between 1:20 and 1:30, including endpoints;
- gelatin and sorbitol are comprised in said first portion in a mutual ratio between 1:20 and 1:30, including endpoints;
and wherein in said second portion:
- gelatin and glycerin are comprised in said second portion in a mutual ratio between 1:10 and 1:25, including endpoints;
- gelatin and sorbitol are comprised in said second portion in a mutual ratio between 1:10 and 1:25, including endpoints.

## Patentansprüche

1. Polykondensat in Partikelform zur Herstellung eines Modells zur Simulation eines Weichgewebes unter Verwendung von Fluorescein-Typ-Fluoreszenz,
**dadurch gekennzeichnet, dass** das Polykondensat Melaminharz, Toluolsulfonamid und einen synthetischen Farbstoff umfasst, wobei das Polykondensat dazu geeignet ist, bei Anregung durch Ultraviolettstrahlen bei 254 nm und/oder im blauen Bereich zwischen 465 und 490 nm einen im Bereich von 480-530 nm beobachteten Fluoreszenzpeak zu emittieren.

2. Mischung zur Herstellung eines Modells zur Simulation eines Gehirnweichgewebes unter Verwendung von Fluorescein-Typ-Fluoreszenz, **dadurch gekennzeichnet, dass** sie Silikon und ein Polykondensat nach Anspruch 1 umfasst.

3. Mischung nach Anspruch 2, wobei der Gehalt an Polykondensat zwischen 0,01 % und 1 % (Gew./Gew.) liegt, einschließlich der Endpunkte.

4. Mischung zur Herstellung eines Modells zur Simulation eines Gehirnweichgewebes unter Verwendung von Fluorescein-Typ-Fluoreszenz, **dadurch gekennzeichnet, dass** sie ein Polykondensat nach Anspruch 1, Wasser, Gelatine, Glycerin und Sorbit umfasst, wobei der Gewichtsanteil an Glycerin und Sorbit in Bezug auf den Gewichtsanteil an Gelatine überwiegt.

5. Mischung nach Anspruch 4, wobei:
- Gelatine und Glycerin in einem gegenseitigen Verhältnis zwischen 1:10 und 1:30 liegen, einschließlich Endpunkten;
- Gelatine und Sorbit in einem gegenseitigen Verhältnis zwischen 1:10 und 1:30 liegen, einschließlich Endpunkten.

6. Mischung nach Anspruch 4 oder 5, wobei:
- Gelatine in einer Menge von höchstens gleich 10 % (Gew./Gew.), vorzugsweise höchstens gleich 5 % (Gew./Gew.), noch bevorzugter zwischen 1 % und 4 % (Gew./Gew.), vorhanden ist;
- Glycerin in einer Menge zwischen 30 % und 55 % (Gew./Gew.), einschließlich Endpunkten, vorzugsweise zwischen 35 % und 50 % (Gew./Gew.), einschließlich Endpunkten, noch bevorzugter zwischen 38 % und 46 % (Gew./Gew.), einschließlich Endpunkten, vorhanden ist;
- Sorbit in einer Menge zwischen 30 % und 55 % (Gew./Gew.), einschließlich Endpunkten, vorzugsweise zwischen 35 % und 50 % (Gew./Gew.), einschließlich Endpunkten, noch bevorzugter zwischen 38 % und 46 % (Gew./Gew.), einschließlich Endpunkten, vorhanden ist.

7. Mischung nach einem der Ansprüche 4 bis 6, umfassend Silikonöl.

8. Modell zur Simulation eines Gehirnweichgewebes unter Verwendung von Fluorescein-Typ-Fluoreszenz, **dadurch gekennzeichnet, dass** es eine Mischung nach einem der Ansprüche 2 bis 7 umfasst.

9. Modell zur Simulation eines Gehirnweichgewebes unter Verwendung von Fluorescein-Typ-Fluoreszenz, **dadurch gekennzeichnet, dass** es eine erste Mischung nach einem der Ansprüche 2 bis 7 und eine zweite Mischung zur Simulation eines Gehirnweichgewebes unter Verwendung von 5-ALA-Fluoreszenz umfasst, wobei die zweite Mischung Silikon und ein zweites Polykondensat umfasst, das Melaminharz, Toluolsulfonamid und einen synthetischen Farbstoff umfasst, wobei das zweite Polykondensat dazu geeignet ist, eine im Bereich von 620-710 nm beobachtete Fluoreszenz zu emittieren, wenn es sichtbarem UV-Licht im Bereich von 375-440 nm ausgesetzt wird.

10. Modell nach Anspruch 9, wobei die erste Mischung in einem Fluorescein-Abschnitt des Modells enthalten ist, der in einem Abstand von einem 5-ALA-Abschnitt des Modells positioniert ist, der die zweite Mischung umfasst.

11. Modell nach Anspruch 10, wobei ein Abstandshalter aus Silikonmaterial zwischen dem Fluorescein-Abschnitt und dem 5-ALA-Abschnitt angeordnet ist.

12. Modell nach Anspruch 10 oder 11, umfassend einen Abschnitt aus Silikonmaterial, in dem eine Tasche erhalten wird, wobei der Fluorescein-Abschnitt in der Tasche untergebracht ist.

13. Modell nach Anspruch 10 oder 11 oder 12, wobei das Modell einen Abschnitt eines Gehirns morphologisch reproduziert, der einen tiefen Frontalsitz, eine Inselrindenoberfläche und eine Fissura Sylvii umfasst, und wobei der Fluorescein-Abschnitt im tiefen Frontalsitz positioniert ist und wobei der 5-ALA-Abschnitt in einem Tal der Fissura Sylvii positioniert ist.

14. Modell nach Anspruch 8, umfassend:
- einen ersten Abschnitt (301) zur Simulation eines gesunden Gewebes;
- einen zweiten Abschnitt (302) zur Simulation eines neoplastischen Gewebes,
wobei der zweite Abschnitt eine Mischung nach einem der Ansprüche 3 bis 7 umfasst,
und wobei der erste Abschnitt (301) Wasser, Gelatine, Glycerin und Sorbit umfasst, wobei der Gewichtsanteil an Glycerin und Sorbit in Bezug auf den Gewichtsanteil an Gelatine überwiegt.

15. Modell nach Anspruch 14, wobei die Gewichtsanteile an Glycerin und Sorbit, die in dem ersten Abschnitt (301) enthalten sind, jeweils größer sind als die Mengen an Glycerin und Sorbit, die in dem zweiten Abschnitt (302) enthalten sind, und wobei in dem ersten Abschnitt:
- Gelatine und Glycerin in dem ersten Abschnitt in einem gegenseitigen Verhältnis zwischen 1:20 und 1:30 enthalten sind, einschließlich Endpunkten;
- Gelatine und Sorbit in dem ersten Abschnitt in einem gegenseitigen Verhältnis zwischen 1:20 und 1:30 enthalten sind, einschließlich Endpunkten;
und wobei in dem zweiten Abschnitt:
- Gelatine und Glycerin in dem zweiten Abschnitt in einem gegenseitigen Verhältnis zwischen 1:10 und 1:25 enthalten sind, einschließlich Endpunkten;
- Gelatine und Sorbit in dem zweiten Abschnitt in einem gegenseitigen Verhältnis zwischen 1:10 und 1:25 enthalten sind, einschließlich Endpunkten.

## Revendications

1. Polycondensat sous forme de particules pour la réalisation d'un modèle permettant de simuler un tissu mou en utilisant une fluorescence de type fluorescéine, **caractérisé en ce que** ledit polycondensat comprend une résine de mélamine, du toluène sulfonamide et un colorant synthétique, ledit polycondensat étant apte à émettre un pic de fluorescence observé dans le domaine de 480-530 nm, lorsqu'il est excité par des rayons ultraviolets à 254 nm et/ou dans la gamme bleue entre 465 et 490 nm.

2. Mélange pour la réalisation d'un modèle permettant de simuler un tissu cérébral mou en utilisant une fluorescence de type fluorescéine, **caractérisé en ce qu'**il comprend de la silicone et un polycondensat selon la revendication 1.

3. Mélange selon la revendication 2, dans lequel la teneur en polycondensat est comprise entre 0,01 % et 1 % (p/p), bornes
incluses.

4. Mélange pour la réalisation d'un modèle permettant de simuler un tissu cérébral mou en utilisant une fluorescence de type fluorescéine, **caractérisé en ce qu'**il comprend un polycondensat selon la revendication 1, de l'eau, de la gélatine, de la glycérine et du sorbitol, dans lequel la teneur en poids de glycérine et de sorbitol est prédominante par rapport à la teneur en poids de gélatine.

5. Mélange selon la revendication 4, dans lequel :
- la gélatine et la glycérine sont présentes selon un rapport mutuel compris entre 1:10 et 1:30, bornes incluses ;
- la gélatine et le sorbitol sont présentes selon un rapport mutuel compris entre 1:10 et 1:30, bornes incluses.

6. Mélange selon la revendication 4 ou 5, dans lequel :
- la gélatine est présente en une quantité au plus égale à 10 % (p/p), de préférence au plus égale à 5 % (p/p), de manière encore plus préférée entre 1 % et 4 % (p/p) ;
- la glycérine est présente en une quantité comprise entre 30 % et 55 % (p/p), bornes incluses, de préférence entre 35 % et 50 % (p/p), bornes incluses, encore plus préférablement entre 38 % et 46 % (p/p), bornes incluses ;
- le sorbitol est présent en une quantité comprise entre 30 % et 55 % (p/p), bornes incluses, de préférence entre 35 % et 50 % (p/p), bornes incluses, encore plus préférablement entre 38 % et 46 % (p/p), bornes incluses.

7. Mélange selon l'une quelconque des revendications 4 à 6, comprenant de l'huile de silicone.

8. Modèle permettant de simuler un tissu cérébral mou en utilisant une fluorescence de type fluorescéine, **caractérisé en ce qu'**il comprend un mélange selon l'une quelconque des revendications 2 à 7.

9. Modèle permettant de simuler un tissu cérébral mou en utilisant la fluorescence de type fluorescéine **caractérisé en ce qu'**il comprend un premier mélange selon l'une quelconque des revendications 2 à 7 et un deuxième mélange permettant de simuler un tissu cérébral mou en utilisant la fluorescence 5-ALA, ledit deuxième mélange comprenant de la silicone et un deuxième polycondensat comprenant de la résine mélamine, du toluène sulfonamide et un colorant synthétique, ledit deuxième
polycondensat étant apte à émettre une fluorescence observée dans le champ de 620-710 nm, lorsqu'il est exposé à une lumière UV visible dans la plage de 375-440 nm.

10. Modèle selon la revendication 9, dans lequel le premier mélange est inclus dans une partie fluorescéine du modèle positionnée à une distance d'une partie de 5-ALA du modèle comprenant le deuxième mélange.

11. Modèle selon la revendication 10, dans lequel un espaceur en matériau silicone est interposé entre la partie fluorescéine et la partie 5-ALA.

12. Modèle selon la revendication 10 ou 11, comprenant une partie en matériau silicone, dans laquelle une poche est obtenue, la partie fluorescéine étant logée dans ladite poche.

13. Modèle selon la revendication 10 ou 11 ou 12, dans lequel ledit modèle reproduit morphologiquement une partie du cerveau comprenant un siège avant profond, une surface insulaire et une scissure de Sylvius, et dans lequel la partie fluorescéine est positionnée dans le siège avant profond et dans lequel la partie 5-ALA est positionnée dans une vallée de la scissure de Sylvius.

14. Modèle selon la revendication 8 comprenant :
- une première partie (301) permettant de simuler un tissu sain ;
une deuxième partie (302) permettant de simuler un tissu néoplasique,
dans lequel ladite deuxième partie comprend un mélange selon l'une quelconque des revendications 3 à 7,
et dans lequel ladite première partie (301) comprend de l'eau, de la gélatine, de la glycérine et du sorbitol, dans lequel la teneur en poids de glycérine et de sorbitol est prédominante par rapport à la teneur en poids de gélatine.

15. Modèle selon la revendication 14, dans lequel les quantités en pourcentage en poids de glycérine et de sorbitol comprises dans ladite première partie (301) sont supérieures aux quantités de glycérine et de sorbitol comprises dans ladite deuxième partie (302), respectivement, et dans lequel dans ladite première partie :
- la gélatine et la glycérine sont comprises dans ladite première partie selon un rapport mutuel compris entre 1:20 et 1:30, bornes incluses ;
- la gélatine et le sorbitol sont compris dans ladite première partie selon un rapport mutuel compris entre 1:20 et 1:30, bornes incluses ;
et dans lequel dans ladite deuxième partie :
- la gélatine et la glycérine sont comprises dans ladite deuxième partie selon un rapport mutuel compris entre 1:10 et 1:25, bornes incluses ;
- la gélatine et le sorbitol sont compris dans ladite deuxième partie selon un rapport mutuel compris entre 1:10 et 1:25, bornes incluses.
